# FASCICULE DE BREVET EUROPEEN

(11) **EP 0 286 564 B1**
(45) Date de publication et mention de la délivrance du brevet: **04.08.1993**
(21) Numéro de dépôt: 88500027.3
(22) Date de dépôt: 17.03.1988
(51) Int. Cl.: C01F 5/06

(54) **Procédé d'obtention d'oxyde de magnesium d'une haute pureté à partir de minerais contenant du calcium et du magnesium**
Verfahren zur Herstellung von hochreinem Magnesiumoxid aus Calcium und Magnesium enthaltenden Mineralien
Process for the production of high-purity magnesium oxide from minerals containing calcium and magnesium

(30) Priorité: 03.04.1987 ES 8700970
(43) Date de publication de la demande: 12.10.1988
(73) Titulaire: TECNOLOGIA Y GESTION DE LA INNOVACION S.A., 28006 Madrid (ES)
(72) Inventeur: Fernandez Tornero, Federico, E-28023 Madrid (ES); Velasco Velez, Jorge, E-28006 Madrid (ES)
(74) Mandataire: Thinat, Michel

(56) Documents cités:
- BE-A- 503 408
- DE-C- 14 936
- DE-C- 657 193
- US-A- 3 340 003
- CHEMICAL ABSTRACTS, vol. 102, no. 8, 25 février 1985, page 126, abrégé no. 64320m, Columbus, Ohio, US; D. TRENDAFELOV et al: "Preparation of high-purity magnesium oxide from natural dolomite", & IZV. KHIM. 1984, 17(2), 157-62

## Description

Le développement technologique de ces dernières années a exigé de l'industrie des réfractaires des produits chaque fois plus résistants du point de vue thermique, ce qui a eu pour conséquence l'utilisation de matières premières plus pures et avec des spécifications toujours plus sévères en ce qui concerne leur teneur en impuretés.

L'oxyde de magnésium constitue la base des réfractaires basiques, mais sa production à partir de la magnésite naturelle a été remplacée dernièrement par celle obtenue à partir de l'eau de mer, cette dernière représentant actuellement 85 % de la consommation.

Le procédé conventionnel d'obtention de l'oxyde de magnésium à partir de l'eau de mer ou de saumures consiste à le précipiter sous forme d'hydroxyde par addition d'un alcali, de préférence l'oxyde de calcium. Avant de réaliser cette opération, l'eau de mer doit être traitée afin d'éliminer les particules en suspension et les carbonates.

Or, ce procédé, qui devrait être simple, devient difficile à cause de précautions qu'il faut prendre pour obtenir un oxyde de magnésium d'une haute pureté. En premier lieu, le carbonate de calcium utilisé doit comporter la teneur la plus basse d'impuretés possible. En deuxième lieu, la calcination du carbonate de calcium utilisé doit être rigoureusement contrôlée afin d'éviter qu'il reste une proportion élevée de cette substance non décomposée si la température est basse ou bien de l'oxyde de calcium vitrifié si la température est élevée, ces deux substances restant alors retenues dans l'hydroxyde de magnésium et le rendant impur. Un autre facteur restrictif du processus - et qui exige des phases intermédiaires - est la présence de bore dans l'eau de mer qui est fortement retenu par l'hydroxyde de magnésium et dont le pourcentage ne doit pas dépasser 0,01 %.

Si la précipitation de l'hydroxyde de magnésium est réalisée à partir de saumures, aux difficultée signalées s'ajoute la nécessité d'éliminer au préalable les ions sulfate de la lessive pour eviter leur précipitation ensemble avec l'hydroxyde de magnésium.

Un autre alcali qu'on utilise parfois est la dolomite, laquelle, tout comme le carbonate de calcium, doit être préalablement calcinée dans des conditions similaires. Cependant, les problèmes indiqués ne disparaissent pas avec l'emploi de ce nouvel agent précipitant, ils ne font que s'atténuer.

Le document US N° 3 340 003 décrit un procédé pour produire des composés alkalinoterreux. La matière première contenant du calcium et/ou du magnésium est traitée thermiquement à une température comprise entre 1150° et 1425°C, avant d'être lixiviée avec une solution aqueuse de sucre dans une concentration allant de 5 à 50% en poids en sucre. L'ajout d'additifs tels que l'alcool ou la soude au niveau de l'état de lixiviation permet de contrôler le pH de la solution, et par la suite, dans le procédé, d'accélérer la vitesse de réaction entre le sucre et le calcium. Après avoir séparé l'oxyde de magnésium hydraté de la solution de sucre, cette dernière étant sous-traitée avec un agent carbonatant où le pH de la solution est compris entre 9,6 et 8,4.

L'invention objet du présent brevet élimine les difficultés précédemment décrites et permet d'obtenir, au moyen de traitements relativement simples, de l'oxyde de magnésium d'une pureté élevée à partir de minerais dolomitiques ou de tout autre minerai contenant du calcium et du magnésium, sans intervention de l'eau de mer ou de saumures.

Le procédé est, pour l'essentiel, le suivant : décomposition thermique du minerai contenant du calcium et du magnésium granulé à la grosseur désirée, suivie d'une lixiviation avec une solution aqueuse de saccharose ou d'un autre produit qui en contienne, de façon à obtenir une solution de saccharate de calcium avec de l'oxyde de magnésium hydraté en suspension, lequel est séparé par filtrage ou centrifugation et purifié par des lavages successifs avec de l'eau contenant ou non un petit pourcentage de calcium et calciné ensuite pour le transformer en oxyde de magnésium. La solution de saccharate de calcium est traitée avec un agent carbonatant pour précipiter le calcium sous forme de carbonate, la solution régénérée de saccharose étant recyclée à la phase de lixiviation. Le procédé est caractérisé par les caractéristiques de la revendication 1.

La phase de décomposition thermique peut être réalisée dans n'importe quel type de four du genre fours à lit statique ou fluidisé, fours rotatifs, etc, ces derniers, les rotatifs, étant les plus adéquats. La température de calcination oscille entre 600°C et 1000°C, de préférence entre 850 et 1000°C, et elle dépend du type de four utilisé. Le temps de séjour, qui dépend également du type de four et de la grosseur du grain de minerai, peut osciller dans une large mesure.

Le produit obtenu par la décomposition thermique du minerai de départ, constitué par un mélange d'oxydes de calcium et de magnésium, est soumis à une lixiviation avec une solution aqueuse de saccharose dont la concentration peut varier entre 30 g/l et 500 g/l de saccharose dissous, de préférence entre 150 et 200 g/l. Le rapport molaire oxyde de calcium/saccharose est variable : il dépend du degré de pureté qu'on désire obtenir pour l'oxyde de magnésium . Cependant, pour obtenir de l'oxyde de magnésium d'une pureté élevée, le rapport doit être compris entre 0,7 et 1,5, les rapports les plus adéquats se situant entre 1:1 et 1:1,1. La température de l'opération peut varier considérablement, mais se situe de préférence entre 20 et 40°C. Le temps de contact augmente à mesure qu'augmente la grosseur du grain de minerai et peut varier entre une demi-heure pour les fractions les plus fines et 4 ou 5 heures pour les fractions les plus grosses.

La suspension obtenue par cette opération est soumise à une centrifugation ou à un filtrage ; on obtient d'une part une solution de saccharate de calcium qui sera traitée ensuite et d'autre part de l'oxyde de magnésium hydraté qui est purifié de la solution à l'aide de lavages successifs avec de l'eau contenant ou non une petite concentration de calcium et est calciné enfin pour le transformer en oxyde de magnésium dans les conditions habituelles pour obtenir de la magnésite caustique ou sinter.

Afin de rentabiliser le processus, la solution de saccharate de calcium est régénérée par carbonatation en vue d'éliminer le calcium présent. Comme agent carbonatant, on peut utiliser, parmi d'autres, l'anhydride carbonique, les carbonates ou bicarbonates solubles (sodique, potassique, etc) ou les gaz de la décomposition thermique. Le pH final de la solution doit être compris entre 5 et 8,5, de préférence entre 6,5 et 7. La température de travail peut varier dans une large mesure et de préférence entre 20 et 40°C, alors que la pression peut osciller entre la valeur de la pression atmosphérique et 5 kg/cm2. La solution obtenue, une fois éliminé par filtrage ou par centrifugation le carbonate de calcium formé, contient de la saccharose apte à être recyclée et utilisée à nouveau dans la phase de lixiviation après en avoir contrôlé la concentration.

Il est donné ci-après un exemple explicatif, et non limitatif, qui illustre le procédé objet de la présente invention. On part d'une dolomite broyée au-dessous de 0,25 mm, dont la composition est la suivante :

| | |
|---|---|
| Co₃Ca | 53,37 % |
| CO₃Mg | 44,97 % |
| CaO | 1,25 % |
| MgO | 0,30 % |
| SiO₂ | 0,05 % |
| K₂O | 0,01 % |
| Fe₂O₃ | 0,02 % |
| Al₂O₃ | 0,04 % |

La dolomite est soumise à un traitement thermique dans un four rotatif à une température de 850°C pendant 1 heure et on obtient un produit calciné dont la composition est la suivante :

| | |
|---|---|
| CaO | 58,69 % |
| MgO | 41,08 % |
| SiO₂ | 0,09 % |
| K₂O | 0,02 % |
| Fe₂O₃ | 0,03 % |
| Al₂O₃ | 0,07 % |

On prend 1 kg de ce produit et on le traite avec une dissolution 0,5 molaire de saccharose dans de l'eau (3579 g de saccharose dissous dans 121 litres d'eau), ce qui suppose un rapport molaire oxyde de calcium/saccharose de 1:1,1. On agite pendant 1 heure à la température ambiante et on centrifuge. Le solide obtenu, de l'oxyde de magnésium hydraté, est lavé convenablement et, une fois sec, calciné, ce qui permet d'obtenir 414,8 g d'oxyde de magnésium, dont la composition est la suivante :

| | |
|---|---|
| MgO | 99,03 % |
| CaO | 0,10 % |
| SiO₂ | 0,22 % |
| K₂O | 0,05 % |
| Fe₂O₃ | 0,07 % |
| Al₂O₃ | 0,17 % |

La dissolution provenant de la lixiviation est traitée à la température ambiante avec de l'anhydride carbonique en quantité suffisante pour que le pH de la dissolution soit de 6,70, de sorte que, après filtrage, on obtient une solution de saccharose avec un taux de calcium de 0,1 g/l.

## Revendications

1. Procédé d'obtention d'oxyde de magnésium d'une haute pureté à partir de minerai contenant du calcium et du magnésium consistant en une décomposition thermique du minerai granulé suivie d'une lixiviation avec une solution aqueuse comprenant du saccharose de façon à obtenir une solution de saccharate de calcium avec de l'oxyde de magnésium hydraté en suspension, lequel est séparé par filtrage et purifié par des lavages successifs et calciné ensuite, alors que la solution de saccharate de calcium est traitée avec un agent carbonatant afin de précipiter le calcium présent sous forme de carbonate, la solution de saccharose étant recyclée à la phase de lixiviation, caractérisé en ce que la température de la décomposition thermique du minerai granulé est comprise entre 600° et 1000°C et en ce que la carbonatation de la solution de saccharate de calcium est effectuée jusqu'à obtenir un pH dans la solution compris entre 5 et 8,5.

2. Procédé selon la revendication 1, caractérisé par le fait que la décomposition thermique du minerai est effectuée dans un four à une température comprise entre 850° et 1000°C.

3. Procédé selon la revendication 1 ou 2, caractérisé par le fait que la carbonatation est effectuée jusqu'à obtenir un pH dans la solution compris entre 6,5 et 7.

4. Procédé selon la revendication 1, 2 ou 3, caractérisé par le fait que le rapport molaire oxyde de calcium/saccharose est compris entre 0,7 et 1,5 et de préférence entre 1:1 et 1:1,1.

5. Procédé selon la revendication 1, 3 ou 4, caractérisé par le fait que la température de lixiviation est comprise entre 20° et 40°C.

6. Procédé selon la revendication 1, 4 ou 5, caractérisé par le fait que la concentration de saccharose dans la solution lixiviante est comprise entre 30 g/l et 500 g/l et de préférence entre 150 et 200 g/l.

7. Procédé selon la revendication 1, 4, 5 ou 6, caractérisé par le fait que le temps de contact du minerai avec la solution de saccharose dépend de la grosseur des grains du minerai et varie entre une demi-heure pour les fractions les plus fines et 4 ou 5 heures pour les fractions les plus grosses.

8. Procédé selon l'une des revendications 1 à 7, caractérisé par le fait que l'agent carbonatant peut être de l'anhydride carbonique, des gaz inertes et/ou de l'air enrichi avec de l'anhydride carbonique, des carbonates ou des bicarbonates solubles, tels que sodiques ou potassiques et des gaz provenant de la décomposition thermique.

9. Procédé selon l'une des revendications 1 à 8, caractérisé par le fait que la carbonatation est effectuée à une pression des gaz de carbonatation comprise entre la pression atmosphérique et 5 kg/cm². (49.10⁴Pa)

10. Procédé selon la revendication 1, 3, 8 ou 9, caractérisé par le fait que la carbonatation est effectuée à une température comprise entre 20° et 40°C.

## Claims

1. A process for obtaining magnesium oxide of a high purity from an ore containing calcium and magnesium, comprising thermal decomposition of the granulated ore followed by leaching of it with an aqueous solution containing saccharose so as to obtain a solution of calcium saccharate with the hydrated magnesium oxide in suspension, which is separated by filtration, purified by successive washing and then roasted, when the calcium saccharate solution is treated with a carbonating agent in order to precipitate the calcium present in the form of a carbonate, the saccharose solution being recycled to the stage of leaching, characterised in that the temperature of the thermal decomposition of the granulated ore is between 600º and 1000ºC and also in that the carbonation of the calcium saccharate solution is carried out until the pH of the solution is between 5 and 8.5.

2. A process according to Claim 1, characterised in that the thermal decomposition of the ore is carried out in an oven at a temperature between 850º and 1000ºC.

3. A process according to Claim 1 or 2, characterised in that the carbonation is carried out until the pH of the solution reaches between 6.5 and 7.

4. A process according to Claim 1, 2 or 3, characterised in that the molar ratio of calcium oxide to saccharose is between 0.7 and 1.5 and preferably between 1:1 and 1:1.1.

5. A process according to Claim 1, 3 or 4, characterised in that the leaching temperature is between 20º and 40ºC.

6. A process according to Claim 1, 4 or 5, characterised by the fact that the concentration of saccharose in the leaching solution is between 30 g/l and 500 g/l, preferably between 150 and 200 g/l.

7. A process according to Claim 1, 4, 5, or 6, characterised in that the contact time of the ore with the saccharose solution depends on the size of the grains and varies between half an hour for the finest particles and 4 or 5 hours for the largest.

8. A process according to any one of Claims 1 to 7, characterised in that the carbonating agent can be a carbonic anhydride inert gases and/or air enriched with a carbonic anhydride, soluble carbonates or bicarbonates such as sodium or potassium and gases arising from the thermal decomposition.

9. A process according to any one of Claims 1 to 8, characterised by the fact that the carbonation is carried out at a carbonation gas pressure of between atmospheric pressure and 5 kg/cm². (49x10⁴ Pa)

10. A process according to Claim 1, 3, 8 or 9, characterised in that the carbonation is carried out at a temperature of between 20º and 40ºC.

## Patentansprüche

1. Verfahren zur Herstellung von Magnesiumoxyd mit hoher Reinheit aus Calcium und Magnesium enthaltendem Erz durch thermische Zersetzung des granulierten Erzes und nachfolgende Auslaugung mit einer wäßrigen Lösung die Saccharose enthält, wobei man eine Calciumsaccharatlösung mit darin suspendiertem hydratisiertem Magnesiumoxyd erhält, das durch Filtration abgetrennt und durch aufeinanderfolgende Waschungen gereinigt und schließlich calciniert wird, während die Calciumsaccharatlösung mit einem Carbonationsmittel behandelt wird, um das vorhandene Calcium in Form von Carbonat auszufällen, und die Saccharoselösung zur Auslaugungsstufe zurückgeführt wird, dadurch gekennzeichnet, daß die Temperatur der thermischen Zersetzung des granulierten Erzes zwischen 600º und 1000ºC liegt, und die Carbonation der Calciumsaccharatlösung bis zu einem pH-Wert der Lösung zwischen 5 und 8.5 durchgeführt wird.

2. Verfahren nach Anspruch 1, dadurch gekennzeichnet, daß die thermische Zersetzung des Erzes in einem Ofen bei einer Temperatur zwischen 850º und 1000ºC durchgeführt wird.

3. Verfahren nach Anspruch 1 oder 2, dadurch gekennzeichnet, daß die Carbonation bis zu einem pH-Wert der Lösung zwischen 6.5 und 7 durchgeführt wird.

4. Verfahren nach Anspruch 1, 2 oder 3, dadurch gekennzeichnet, daß das Molverhältnis Calciumoxyd/Saccharose zwischen 0.7 und 1.5, vorzugsweise zwischen 1:1 und 1:1.1 liegt.

5. Verfahren nach Anspruch 1, 3 oder 4, dadurch gekennzeichnet, daß die Temperatur der Carbonation zwischen 20º und 40ºC liegt.

6. Verfahren nach Anspruch 1, 4 oder 5, dadurch gekennzeichnet, daß die Konzentration der Saccharose in der Auslaugungslösung zwischen 30 g/l und 500 g/l, und vorzugsweise zwischen 150 und 200 g/l liegt.

7. Verfahren nach Anspruch 1, 4, 5 oder 6, dadurch gekennzeichnet, daß die Kontaktzeit des Erzes mit der Saccharoselösung von der Größe des Erzgranulats abhängt, und zwischen einer halben Stunde für die feinsten Fraktionen und 4 oder 5 Stunden für die gröbsten Fraktionen variiert.

8. Verfahren nach einem der Ansprüche 1, bis 7, dadurch gekennzeichnet, daß das Carbonationsmittel Kohlendioxid, ein mit Kohlendioxid angereichertes inertes Gas und/oder Luft, ein lösliches Carbonat oder Bicarbonat, wie z.B. von Natrium oder Kalium, und ein Gas aus der thermischen Zersetzung sein kann.

9. Verfahren nach einem der Ansprüche 1 bis 8, dadurch gekennzeichnet, daß die Carbonation unter einem Druck des Carbonationsgases zwischen Atmosphärendruck und 5 kg/cm² (49.10⁴ Pa) durchgeführt wird.

10. Verfahren nach Anspruch 1, 3, 8 oder 9, dadurch gekennzeichnet, daß die Carbonation bei einer Temperatur zwischen 20º und 40ºC durchgeführt wird.
